# EUROPEAN PATENT SPECIFICATION

(11) **EP 0 343 127 B1**
(45) Date of publication and mention of the grant of the patent: **24.11.1993**
(21) Application number: 89830216.1
(22) Date of filing: 16.05.1989
(51) Int. Cl.: B60K 41/02

(54) **An electromechanical servocontrol device to engage and disengage the clutch of a motor vehicle speed gear**
Elektromechanisches Hilfskraft-Steuerungsgerät zum Ein- und Ausrücken der Kupplung eines Kraftfahrzeuggetriebes
Dispositif de servocommande électromécanique pour engager et désengager l'embrayage de la transmission d'un véhicule à moteur

(30) Priority: 17.05.1988 IT 4797588
(43) Date of publication of application: 23.11.1989
(73) Proprietor: Venturini, Stefano, I-00167 Rome (IT)
(72) Inventor: Venturini, Stefano, I-00167 Rome (IT)
(74) Representative: Taliercio, Antonio

(56) References cited:
- EP-A- 0 130 794
- EP-A- 0 189 050
- EP-A- 0 193 502
- DE-A- 3 730 714
- FR-A- 1 480 556

## Description

This invention relates to an electromechanical servocontrol device to engage and disengage the clutch of a motor vehicle speed gear.

More specifically, this invention relates to a device of the kind mentioned above, which is suitable for adaptation to any type of diesel- or petrol-engine vehicles, in particular in the case of changes required for allowing disabled people to drive.

Technologies employed in such field for transforming the operation of a motor vehicle so as to allow disabled people to drive easily and safely have been widely developed in the recent years.

As regards the automation of clutch operation, the present Applicant has recently realized and patented a servoclutch device operating on a pneumatic principle (EP-A-0193502).

Said device, whose employment has shown to be definitely advantageous, gives however some minor drawbacks that make its application not fully advantageous under some specific conditions.

More particularly, the pneumatic servoclutch does not allow the realization of an accelerator motion proportional to the clutch motion in case the pressure exerted on the accelerator pedal is decreased fully or partially.

Moreover, as the operation of the pneumatic servoclutch is mainly based on the exploitation of the vacuum obtainable in suction engines, some problems arise in connection with the adoption of such type of servocontrol in diesel-engines and mainly in turbo diesel engines.

In such cases it is necessary to assemble in the vehicle in question a pressure reducing device that allows the servocontrol to operate.

In EP-A-0130794 an electronic clutch control is described which senses the position of the accelerator pedal and according to the vehicle speed regulates the clutch position in different control means in a closed loop control with a clutch position sensor and a servomotor to engage the clutch.

In the light of the notions mentioned above and, in addition, of the problems met with in the employment of clutch automation devices realized up to the present time, this invention suggests an electromechanical servocontrol device for operating a clutch, which device obviates all said drawbacks so that it can be assembled on any type of motor vehicle.

It is a further object of the present invention a device of the kind mentioned above which is structurally simple, sufficiently cheap and can be mounted with no substantial changes in the structure of the vehicle and in common specialized shops.

It is a further object of the present invention that of realizing a device of the kind mentioned above that operates directly on the pedals of the clutch and of the accelerator and that can be easily disinserted in order to cause the vehicle to return to its manual operation when the control electric circuit is turned off.

Accordingly, it is a specific object of the present invention an electromechanical servocontrol device for engaging and disengaging the clutch in speed gears of motor vehicles, said device comprising an electric position transducer connected to the drive means of the acceleration of the motor vehicles; means for detecting the speed of the motor vehicle; gear position or neutral position arranged on the speed gear drive means; a switching device connected to said signal generation device, as well as to said gear position or neutral position and to said means for detecting the motor vehicle speed, for switching the device operation from the mode proportional to the motion of the acceleration means at low speed, to the engagement/disengagement (ON/OFF) mode, following the pulse received from said means at high speed; a servomotor connected to the clutch drive means; a second electric position transducer of the clutch; and a device for comparing the desired clutch position with the position pointed out by said second electric transducer, connected to said switching device and to said servomotor through a power amplifier, characterized in that it further comprises a device for generating a parabolic type function signal which function is so realized as to correlate the motions of said acceleration means with the clutch drive means; calibration means for calibrating the speed threshold at which said switching occurs and comparison means for comparing the motor vehicle speed with said threshold speed.

Obviously said acceleration drive means can be made up of the pedal, of the carburettor lever, of the manual accelerator control, and so on.

The device for generating a parabolic function signal is a device that is capable of generating a function which takes into account the hysteresis separating the attachment and detachment points of the clutch.

Said motor vehicle speed detection means can consist of the detecting devices of the types already known.

Preferably according to the present invention said means will be made up of a magnetic closeness sensor arranged on a wheel of the motor vehicle, which sensor emits two pulses that are received by a device that compares the wheel speed with the calibration speed, which device is connected to the switching device, as well as by a device that generates pulses which is in turn connected to the pre-calibration potentiometer of the threshold speed and delivers signals to said comparison device.

According to the present invention, gear position or neutral position means arranged on the speed gear drive means can be made up of an electric contact, of the type acted on by pressure or the like.

Said power amplifier according to the present invention can be of electromechanical, of electronic or of mechanical type.

According to a preferred embodiment of the present invention, a further potentiometer is provided inside the motor vehicle, said potentiometer allowing the signal out of the generating device to be adjusted.

Again according to the present invention a device can be provided between said switching device and said comparison means, which further device is in turn connected to the motor vehicle ignition means and to the neutral position of the speed gear, and allows the clutch to be engaged when the instrument board is switched off and the motor vehicle speed gear is in the neutral position.

According to a further preferred embodiment of the device according to the present invention, a contact device connected to the braking system can be provided which is connected to said power amplifier as well as to said pulse generator through the motor vehicle speed detection means, said contact device allowing the clutch to be disengaged during braking before the speed is reduced to a value below said speed threshold.

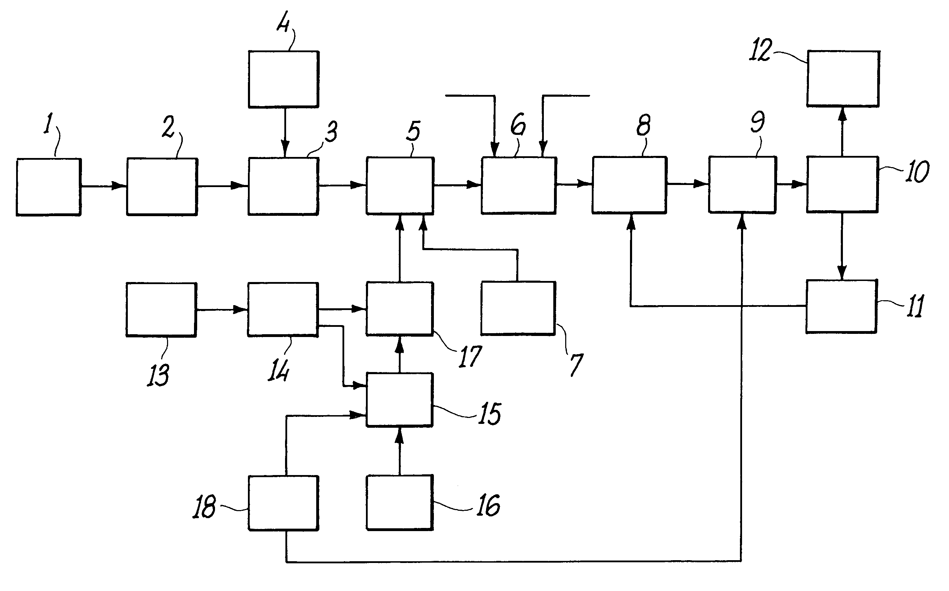

This invention will be disclosed in the following just for illustrative and not for limitative purposes with particular reference to Figure 1 in which a block scheme is shown which represents a preferred embodiment of the device according to the present invention.

The reference numeral 1 in said figure points out the accelerator pedal to which the accelerator position electric transducer 2 is connected.

A parabolic function signal generator 3 is provided downstream said transducer 2, which generator is to take into account the hysteresis that separates the attachment and detachment points of the clutch.

A potentiometer 4 is provided inside the interior compartment of the motor vehicle, said potentiometer allowing the curve of said generator 3 to be modified so as to allow the driver to adapt directly from the driving position the motor vehicle to different load and/or road slope conditions, as well as to adapt the same to the driving sensitivity and to compensate for disk wear in time and for clutch adjustment lengthening.

The reference numeral 5 points out the device that is employed for switching the operation of the device according to the present invention from the proportional mode during starting to the ON-OFF mode when the vehicle is riding, while the device 6 connected to the motor vehicle ignition, line A, and to the neutral position, line B, is to allow the clutch to be engaged when it is switched to the line A in case the engine is not in operation and the instrument board is turned off, and to allow the clutch to be engaged while the speed gear is in the neutral position when it is switched to the line B.

When the device 5 is operating in the ON-OFF mode, the control action for inserting the device according to the present invention comes from the contact 7 of electric type, pressure sensor or similar type, arranged on the ball grip of the speed gear lever of the motor vehicle.

The comparison between the desired position of the clutch and the position actually occupied is carried out through the stage 8 connected to a transducer 11 that detects the position of the clutch 12 through the servomotor 10.

A power amplifier 9 for controlling the servomechanism is provided between the stage 8 and the servomotor 10, said power amplifier being of electromechanical, mechanical or electronic type.

The detection of the motor vehicle speed for switching the device 5 from the proportional operation mode to the ON-OFF mode as soon as a previously set value of speed is overcome, which value can be calibrated at about 15-20 km/hour, is carried out directly on the wheel 13 through an electromagnetic closeness sensor 14 that delivers the signal to a pulse generator 15, connected to a potentiometer 16 for calibrating the speed threshold, and to a stage 17 for comparing the speed of the motor vehicle to the desired speed, which stage delivers the signal to the device 5.

When the driver brakes the motor vehicle while riding at high speed without down shifting, the clutch detaches just at a speed lower than the calibration speed.

Clutch detachment is obtained in advance at a speed value which is a determined percentage of the calibrated value of speed through the contact 18 arranged on the brake and connected to the power amplifier 9 and to the pulse generator 15, so that the motor vehicle engine is prevented from stopping.

As already mentioned above, the device according to the present invention can operate according to two different modes.

When starting the motor vehicle, and till a speed of about 15-20 km/hour is reached, the clutch position depends on the accelerator position according to a parabolic type law that is so studied as to take into account the hysteresis that separates the attachment and detachment points of the clutch.

The potentiometer 4 as already illustrated above allows such curve to be recorded.

The second operating mode starts when the motor vehicle is riding and the device 5 is switched, so that the position of the accelerator does not affect the position of the clutch any more.

The clutch will be engaged or disengaged through the contact 7 any time the speed gear lever is touched on.

In that case, the clutch is positioned between two extreme ends which are definitely determined with the proviso that the engagement speed is slightly reduced with respect to the disengagement speed, in order to avoid sharp engagements and consequent troublesome accelerations.

In both operation modes disclosed above, positioning occurs through comparison of the electric signal from the position transducer 2, 7 assembled on the accelerator 1 (or on the speed gear lever according to the phase) with the signal coming from a similar transducer 11 arranged at the output of the servocontrol that transduces the position of the clutch lever 12. The difference signal is then applied to the power set 9 that causes the servomotor 10 to rotate in the clockwise or the anti-clockwise rotation till said difference is annulled.

The circuit for detecting the speed threshold is based on the principle of comparing the period of one of the vehicle wheels 13 with a time interval set forth by the driver through a suitable electric drive means. Such revolution time is determined by measuring the time interval between two consecutive pulses emitted by an electromagnetic sensor 14 arranged near the wheel, an axle shaft, the driving shaft. The speed threshold is set forth through a potentiometer; this drive means itself also allows to compensate for the wheel diameter which is variable with the type of motor vehicle.

The power set 10 can be made up of a spring which is coupled with a chain that engages through 180° with a pinion and which is connected on the other side to the tie rod of the clutch.

Said spring stores the release power of the clutch and it releases the same in the next pulling phase. Thus the clutch pedal is driven directly without any need for mechanical changes in the motor vehicle, and employing a driving electric power of a definitely very low value.

## Claims

1. An electromechanical servocontrol device to engage and disengage the clutch (12) in motor vehicle speed gears, said device comprising an electric position transducer (2) connected to the drive means (1) of the acceleration of the motor vehicle; means (14) for detecting the speed of the motor vehicle; gear position or neutral position sensor means (7) arranged on the speed gear drive means; a switching device (5) connected to said signal generation device (3), as well as to said gear position or neutral position sensor means (7) and to said means (14) for detecting the motor vehicle speed, for switching the device operation from the mode proportional to the motion of the acceleration means at low speed, to the engagement/disengagement (ON/OFF) mode, following the pulse received from said sensor means (7) at high speed; a servomotor (10) connected to the clutch drive means; a second electric position transducer (11) of the clutch (12); and a device (8) for comparing the desired clutch position with the position pointed out by said second electric transducer (11), connected to said switching device (5) and to said servomotor (10) through a power amplifier (9), characterized in that it further comprises a device (3) for generating a parabolic type function signal which function is so realized as to correlate the motions of said acceleration means (1) with the clutch drive means; calibration means (16) for calibrating the speed threshold at which said switching occurs and comparison means (17) for comparing the motor vehicle speed with said threshold speed.

2. A device according to claim 1, characterized in that said drive means (1) of the acceleration are made up of the pedal or of the carburettor lever or of the accelerator manual drive means.

3. A device according to claims 1 or 2, characterized in that said device (3) for generating a parabolic type function signal generates a function that is determined on the basis of the hysteresis that separates the engagement and disengagement points of the clutch.

4. A device according to any one of the preceding claims, characterized in that the means (14) for detecting the motor vehicle speed are made up of a magnetic closeness sensor, arranged on a wheel (13) of the vehicle, that emits two pulses which are received by a device (17) that compares the actual speed with the calibrated speed, and then is connected to the switching device (5), said detection means (14) being also made up of a pulse generator (15) which is in turn connected to the potentiometer (16) employed for pre-calibrating the threshold speed and delivers signals to said comparison device (8).

5. A device according to any one of the preceding claims, characterized in that said sensor means (7) provided on the speed gear drive means are made up of an electric contact or of a pressure sensor.

6. A device according to any one of the preceding claims, characterized in that said power amplifier (9) is of the electromechanical, or of the electronic or of the mechanical type.

7. A device according to claims 1 or 6, characterized in that said power amplifier (9) consists of an accumulation or storing spring coupled to an end of a chain that engages through 180° with a pinion, said chain being connected at the other end to the tie rod of the clutch.

8. A device according to any one of the preceding claims, characterized in that a further potentiometer (4) is provided inside the vehicle, said potentiometer (4) being connected to said device (3) that generated parabolic type signals and allowing said signal to be adjusted.

9. A device according to any one of the preceding claims, characterized in that a device (6) is provided between said switching device (5) and said comparison means (17), said device being connected to said ignition means of the motor vehicle and to the neutral position of the speed gear, and allowing the clutch (12) to be engaged when the instrument board is turned off and the speed gear is in the neutral position.

10. A device according to any one of the preceding claims, characterized in that a contact device is provided which is connected to said power amplifier (9) and to said pulse generator of the speed detection means (14) of the motor vehicle, said device being connected to the braking system and allowing the clutch to be disengaged beforehand during braking, i.e. before the deceleration reaches a value below the threshold speed.

## Patentansprüche

1. Elektromechanisches Hilfskraft-Steuerungsgeraet zum Ein- und Ausruecken der Kupplung eines Wechselgetriebes (12) von Kraftfahrzeugen, mit einem mit Mitteln (1) zur Steuerung der Beschleunigung des Kraftwagens verbundenen elektrischen Stellung-Geber (2); mit Mitteln (14) zum Anzeigen der Geschwindigkeit des Kraftfahrzeuges; am Wechselgetriebe angeordnete Fuehler-Mitteln (7) zum Anzeigen von Einschaltung- und Freilauf-Stellung; ein mit einem Signalerzeuger (3) und mit dem Fuehler-Mittel (7) sowie mit den Mitteln (14) zum Anzeigen der Fahrzeuggeschwindigkeit verbundener Umschalter, zur Umschaltung die Wirkungsweise des Geraetes von der zur Bewegung der Beschleunigungsmittel bei niedrigen Geschwindigkeiten proportionalen Art auf die Einschaltung/Ausschaltung-Art (ON/OFF) gemaess dem von Fuehler-Mitteln (7) bei hoeheren Geschwindigkeiten erhaltenen Signal; mit einem mit dem Antrieb der Kupplung verbundenen Hilfsmotor (10); mit einem zweiten elektrischen Stellungsgeber (11) der Kupplung (12) und mit einer Komparator-Vorrichtung (8) zum Vergleichen der gewuenschten Kupplungsstellung mit der vom genannten zweiten elektrischen Geber (11) angegeben Stellung, wobei diese Vorrichtung (8) mit dem genannten Umschalter (5) und mit dem genannten Hilsmotor (10) ueber einen Leistrungsverstaerker (9) verbunden ist, gekennzeichnet, durch eine Vorrichtung (3) zur Erzeugung eines Signals mit parabolartigen Funktion die so ausgebildet ist, dass sie die Bewegungen der vorgenannten Beschleunigungsmittel (1) und Antriebsmittel der Kupplung zueinander abstimmt, durch Einstellmittel (16) zum Einstellen der Geschwindigkeitsschwelle, bei der die vorgenannte Umschaltung stattfindet und durch Komparatormittel (17) zum Vergleichen der Kraftfahrzeugsgeschwindigkeit mit der vorgenannten Schwellegeschwindigkeit.

2. Vorrichtung nach Anspruch 1, dadurch gekennzeichnet die genannten Beschleunigungsmittel aus einem Pedal oder einem Vergaserhebel oder auch aus handgesteuerten Beschleunigungsmitteln bestehen.

3. Vorrichtung nach Anspruch 1 oder 2, dadurch gekennzeichnet die vorgenannte Vorrichtung (3) zur Erzeugung eines Signals mit parabolischen Funktion eine Funktion bildet, die auf Grund der die Ein- und Ausrueckstellungen trennenden Hysterese bestimmt ist.

4. Vorrichtung nach einem der vorhergehenden Ansprueche, dadurch gekennzeichnet, dass die Mittel (14) zum Anzeigen der Kraftfahrzeugsgeschwindungkeit aus einem magnetischen, auf einem Kraftfahrzeugrad (13) angeordneten Naeherungsfuehler, der zwei Impulse an eine Komparator-Vorrichtung (17) absendet, die die tatsaechliche Geschwindigkeit mit der eingestellten Geschwindigkeit vergleicht und folglich an die Umschaltungsvorrichtung angeschlossen ist und aus einem Impuls-Erzeuger bestehen, der an den Potentiometer zur Einstellung des Schwellegeschwindigkeit angeschlossen ist und Signale an die vorgennate Komparator-Vorrichtung absendet.

5. Vorrichtung nach eienm der vorhergehenden Ansprueche, dadurch gekennzeichnet, dass die vorgenannten, am Antriebsmittel der Kupplung vorgesehenen Fuehlermittel (7) aus einem dektrischen Kontakt oder einem Druck-Fuehler bestehen.

6. Vorrichtung gemaess einem der vorhergehenden Ansprueche, dadurch gekennzeichent, dass der vorgenannte Leistungsverstaerker (9) elektromeschanischer, elektromischer oder mechanischer Art ist.

7. Vorrichtung gemaess einem der vorhergehenden Ansprueche, dadurch gekennzeichnet, dass der vorgenannte Leistungsverstaerker (9) aus einer Speicherfeder besteht, die an ein Ende einer Kette angeschlossen ist, welche ueber einen Winkel von 180° mit einer Ketten-Scheibe gekuppelt ist, wobei das andere Ende der vorgenanten Kette an die Zugstange der Kupplung angeschlossen ist.

8. Vorrichtung gemaess einem der vorhergehenden Ansprueche, dadurch gekennzeichnet, dass innerhalb des Fahrzeuges ein weiterer, an die das Signal der parabolischen Art erzeugende Vorrichtung (3) angeschlossener Potentiometer vorgesehen ist, der die Einstellung des vorgenannten Signals gestattet.

9. Vorrichtung gemaess einem der vorhergehenden Ansprueche, dadurch gekennzeichnet, dass zwischen dem vorgenannten Umschalter (5) und der vorgenannten Komparatorvorrichtung (17) eine Vorrichtung (6) vorgesehen ist, die an Zuendungsmittel des Kraftfahrzeuges und an die Freilaufstellung des Wechselgetriebes angeschlossen ist und das Einruecken des Wechselgetriebes beim ausgeloeschten Instrumentbrett und bei der Freilaufstellung des Wechselgetribes gestattet.

10. Vorrichtung gemaess einem der vorhergehenden Ansprueche, dadurch gekennzeichnet eine Kontaktvorrichtung vorgesehen ist, die an den vorgenannten Leistungsverstaerker (9) und mit dem vorgenannten Impulserzeuger des Geschwindgkeitsfuehlermittels (14) des Kraftfahrzeuges verbunden ist, wobei diese Vorrichtung an die Bremseanordnung angeschlossen ist und eine Verstellung des Ausrueckens der Kupplung beim Bremsen, noch bevor eine Verzoegerung unterhalb der Schwellegeschwindigkeit stattfinden kann, gestattet.

## Revendications

1. Dispositif de servocommande électromécanique pour engager et désengager l'embrayage de la transmission d'un véhicule à moteur, comprenant un transducteur électrique de position (2) joint aux moyens de commande (1) de l'accélération du véhicule à moteur; moyens (14) pour détecter la vitesse du véhicule à moteur; moyens capteurs (7) de positions d'embrayage ou du point mort placés sur les moyens de commande du changement de vitesse; un dispositif de commutation (5) joint à un dispositif de génération de signals (3), aux dits moyens capteurs (7) de positions d'embrayage ou du point mort et aux dits moyens (14) pour détecter la vitesse du véhicule à moteur, pour commuter la mode proportionelle au mouvement des moyens d'accélération à la vitesse bas à la mode de embrayage/débrayage (ON/OFF) selon le signal reçu desdits moyens capteurs (7) à vive allure; un servo-moteur (10) joint aux moyens de commande de l'embrayage; un deuxieme transducteur électrique de position (11) de l'embrayage (12); et un dispositif (8) pour comparer la position d'embrayage desirée avec la position indiquée pour ledit deuxième transducteur électrique (11), joint audit dispositif de commutation (5) et audit servomoteur (10) par un amplificateur de puissance (9), caracterisé en ce qu'il comprend en autre un dispositif (3) pour produire un segnal avec une fonction du type parabolique, fonction qui est réalisée de façon à mettre en corrélation les mouvements desdits moyens d'accelération (1) avec les mouvement desdits moyens de commande de l'embrayage; moyens d'étalonnage (16) pour étalonner le seuil de vitesse, auquel a lieu ladite commutation et moyens de comparaison (17) pour comparer la vitesse du véhicule à moteur avec ladite vitesse de seuil.

2. Dispositif selon la revendication 1, caractérisé en ce que lesdits moyens de commande (1) de l'accélération consistent en le pédal ou en le lever du carburateur ou bien en les moyens de commande mannuels de l'accélérateur.

3. Dispositif selon la revendication 1 ou 2, caractérisé en ce que ledit dispositif (3) pour produire un signal avec la fonction du type parabolique produit une fonction qu'est determinée sur le base de hystérésis qui sépare les points d'embrayage et de débrayage de la transmission.

4. Dispositif selon une quelconque des revendication précédantes, caractérisé en ce que les moyens (14) pour détecter la vitesse du véhicule à moteur consistent en un capteur magnetique de proximité, placé sur une zone (13) du véhicule, qu'émet deux impulsions qui sont reçues par un dispositif (17) pour comparer la vitesse effective avec la vitesse étalonnée et est joint ainsi avec la dispositif de commutation, lesdits moyens de détection consistant aussi en un générateur des impulsions (15), qui est joint, à son tour, au potentiomètre (16) employé pour pre-étalonner la vitesse de seuil et émettre de signals audit dispositif de comparaison (8).

5. Dispositif selon une quelconque des revendications précédentes, caracterisé en ce que lesdits moyens détecteurs (7), placés sur les moyens de commande du changement de vitesse, consistent d'un contact électrique ou d'un détecteur de pression.

6. Dispositif selon une quelconque des revendications précédentes, caracterisé en ce que ledit amplificateur de puissance (9) est du type électromécanique, électronique ou mécanique.

7. Dispositif selon les revendications 1 ou 6, caractérisé en ce que ledit amplificateur de puissance (9) consist en un ressort d'accumulation accouplé à un bout d'une chaîne qui s'engage sur un angle de 180° avec un pignon, ladite chaîn étant jointe, à l'autre bout, avec le tringle de l'embrayage.

8. Dispositif selon une quelconque des revendications précédentes, caractérisé en ce que un autre potentiomètre (4) est arrangé dans le véhicule, ledit potentiomètre (4) étant joint audit dispositif (3) qui produit de segnals du type parabolique et permettant l'ajustage dudit signal.

9. Dispositif selon une quelconque des revendications précédentes, caractérisé en ce que un dispositif (6) est placé entre ledit dispositif de commutation (5) et lesdits moyens de comparaison (17), ledit dispositif étant joint auxdits moyens d'allumage du véhicule à moteur et à la position folle du changement de vitesse et permettant l'enclenchement de l'embrayage (12), quand le tableu de bord est éteint et le changement de vitesse est dans la position folle.

10. Dispositif selon une quelconque des revendications précédentes, caractérisé en ce qu'il comprend un dispositif de contact joint audit amplificateur de puissanse (9) et audit générateur de impulsions desdits moyens de détection (14) du véhicule à moteur, ledit dispositif étant joint au system de frain et permettant l'avance de debrayage de l'embrayage, c'est à dire avant que la décélération atteint un valeur au-dessous de la vitesse de seuil.
